# EUROPEAN PATENT APPLICATION

(11) **EP 4 277 340 A1**
(43) Date of publication of application: **15.11.2023**
(21) Application number: 22766293.9
(22) Date of filing: 08.03.2022
(51) Int. Cl.: H04W 28/02, H04W 40/02

(54) **DATA UNIT PROCESSING METHOD AND APPARATUS, AND NODE AND STORAGE MEDIUM**

(30) Priority: 12.03.2021 CN 202110272365
(71) Applicant: Vivo Mobile Communication Co., Ltd., Dongguan, Guangdong 523863 (CN)
(72) Inventor: LIU, Jinhua, Dongguan, Guangdong 523863 (CN)
(74) Representative: Petraz, Gilberto Luigi
(86) International application number: PCT/CN2022/079714
(87) International publication number: WO 2022/188770

(57) **Abstract**

This application provides a data unit processing method and apparatus, a node, and a storage medium. The method includes: performing, by an IAB node, a data unit processing operation during a switching association period, wherein the data unit processing operation includes at least one of the following: retaining a first BAP protocol data unit PDU having no matching BAP routing configuration in the IAB node; routing, to a target donor DU, a second BAP PDU whose target BAP address is an original donor distributed unit DU; and performing processing according to a BAP routing identifier in a third BAP PDU, wherein the third BAP PDU includes two BAP routing identifiers.

## Description

### CROSS-REFERENCE TO RELATED APPLICATION

This application claims priority to Chinese Patent Application No. 202110272365.X filed on March 12, 2021 in China, which is incorporated herein by reference in its entirety.

### TECHNICAL FIELD

This application relates to the technical field of communications, and in particular to a data unit processing method and apparatus, a node and a storage medium.

### BACKGROUND

In some communication systems (for example: 5^{th} Generation Mobile Communication Technology (5^{th} Generation Mobile Communication Technology, 5G) system), an integrated access backhaul (integrated access backhaul, IAB) system is introduced, where an IAB node in the IAB system includes two parts of functions: a distribution unit (Distributed Unit, DU) and a mobile termination (Mobile Termination, MT). However, at present, when the IAB node switches, the entity of the Backhaul Adaptation Protocol (Backhaul Adaptation Protocol, BAP) of the IAB node is rebuilt or BAP routing is reconfigured, which may cause that some BAP protocol data units (Protocol Data Unit, PDU) of the IAB node are discarded. Therefore, the transmission performance of the IAB node is relatively low.

### SUMMARY

Embodiments of this application provide a data unit processing method and apparatus, a node, and a storage medium to solve the problem of relatively low transmission performance of an IAB node.

An embodiment of this application provides a data unit processing method, including:
performing, by an IAB node, a data unit processing operation during a switching association period, where the data unit processing operation includes at least one of the following:
retaining a first BAP PDU having no matching BAP routing configuration in the IAB node;
routing, to a target donor DU, a second BAP PDU whose target BAP address is an original donor (donor) DU; and
performing processing according to a BAP routing identifier in a third BAP PDU, where the third BAP PDU includes two BAP routing identifiers.

An embodiment of this application further provides a data unit processing method, including:
sending, by a control node, indication information to an integrated access backhaul IAB node, where the indication information is used to instruct the IAB node to perform a data unit processing operation during a switching association period, where the data unit processing operation includes at least one of the following:
retaining a first BAP protocol data unit PDU having no matching backhaul adaptation protocol BAP routing configuration in the IAB node;
routing, to a target donor DU, a second BAP PDU whose target BAP address is an original donor distributed unit DU; and
performing processing according to a BAP routing identifier in a third BAP PDU, where the third BAP PDU includes two BAP routing identifiers.

The embodiment of this application also provides a data unit processing apparatus, including:
an execution module, configured to perform a data unit processing operation during a switching association period, where the data unit processing operation includes at least one of the following:
retaining a first B BAP protocol data unit PDU having no matching backhaul adaptation protocol BAP routing configuration in the integrated access backhaul IAB node;
routing, to a target donor DU, a second BAP PDU whose target BAP address is an original donor distributed unit DU; and
performing processing according to a BAP routing identifier in a third BAP PDU, where the third BAP PDU includes two BAP routing IDs;
where the IAB node includes the apparatus.

An embodiment of this application further provides a data unit processing apparatus, including:
a first sending module, configured to send indication information to an integrated access backhaul IAB node, where the indication information is used to instruct the IAB node to perform a data unit processing operation during a switching association period, where the data unit processing operation includes at least one of the following:
retaining a first BAP protocol data unit PDU having no matching backhaul adaptation protocol BAP routing configuration in the IAB node;
routing, to a target donor DU, a second BAP PDU whose target BAP address is an original donor distributed unit DU; and
performing processing according to a BAP routing identifier in a third BAP PDU, where the third BAP PDU includes two BAP routing IDs;
where the control node includes the apparatus.

The embodiment of this application also provides an integrated access backhaul IAB node, including a memory, a processor, and a program or an instruction that is stored in the memory and that can run on the processor, and when the program or instruction is executed by the processor, steps of the data unit processing method provided in some embodiments of this application are implemented.

The embodiment of this application also provides a network node, including: a memory, a processor, and a program or an instruction that is stored in the memory and that is executable on the processor. When the program or the instruction is executed by the processor, steps of the data unit processing method provided by the embodiment of this application are implemented.

The embodiment of this application also provides a readable storage medium, on which a program or an instruction is stored, and when the program or the instruction is executed by a processor, steps of the data unit processing method on the IAB node side provided by the embodiment of this application are performed, or when the program or the instruction is executed by a processor, steps of the data unit processing method on the control node side provided by the embodiment of this application are performed.

The embodiment of this application also provides a chip, the chip includes a processor and a communication interface, the communication interface is coupled to the processor, and the processor is configured to run programs or instructions to implement steps of the data unit processing method on the IAB node side provided by the embodiment of this application, or steps of the data unit processing method on the control node side provided by the embodiment of this application.

The embodiment of this application also provides a computer program product, the computer program product is stored in a non-transitory storage medium, and the computer program product is executed by at least one processor to implement steps of the data unit processing method on the IAB node side provided by the embodiment of this application, or steps of the data unit processing method on the control node side provided by the embodiment of this application.

The embodiment of this application also provides a communication device, configured to execute steps of the data unit processing method on the IAB node side provided by the embodiment of this application, or steps of the data unit processing method on the control node side provided by the embodiment of this application.

In this embodiment of this application, an IAB node performs a data unit processing operation during a switching association period, where the data unit processing operation includes at least one of the following: retaining a first BAP protocol data unit PDU having no matching BAP routing configuration in the IAB node; routing, to a target donor DU, a second BAP PDU whose target BAP address is an original donor distributed unit DU; and performing processing according to a BAP routing identifier in a third BAP PDU, where the third BAP PDU includes two BAP routing identifiers. This can reduce the discarding of BAP PDUs, thereby improving the transmission performance of the IAB node.

### BRIEF DESCRIPTION OF DRAWINGS

FIG. 1 is a schematic diagram of a wireless communications system to which an embodiment of this application can be applied;
FIG. 2 is a block diagram of another wireless communication system to which the embodiment of this application is applicable;
FIG. 3 is a flowchart of a data unit processing method according to an embodiment of this application;
FIG. 4 is a flowchart of another data unit processing method according to an embodiment of this application;
FIG. 5 is a schematic diagram of a data unit processing method according to an embodiment of this application;
FIG. 6 is a schematic diagram of another data unit processing method according to an embodiment of this application;
FIG. 7 is a structural diagram of a data unit processing apparatus according to an embodiment of this application;
FIG. 8 is a structural diagram of another data unit processing apparatus according to an embodiment of this application; and
FIG. 9 is a structural diagram of a network node according to an embodiment of this application.

### DESCRIPTION OF EMBODIMENTS

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The following clearly and completely describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application without creative efforts shall fall within the protection scope of this application.

The terms "first", "second", and the like in the description and the claims of this application are used to distinguish between similar objects, and do not need to be used to describe a specific order or sequence. It should be understood that, data termed in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. However, a new radio (New Radio, NR) system is described in the following description for illustrative purposes, and the NR terminology is used in most of the following description, although these technologies can also be applied to applications other than the NR system application, such as the 6^{th} generation (6th Generation, 6G) communication system.

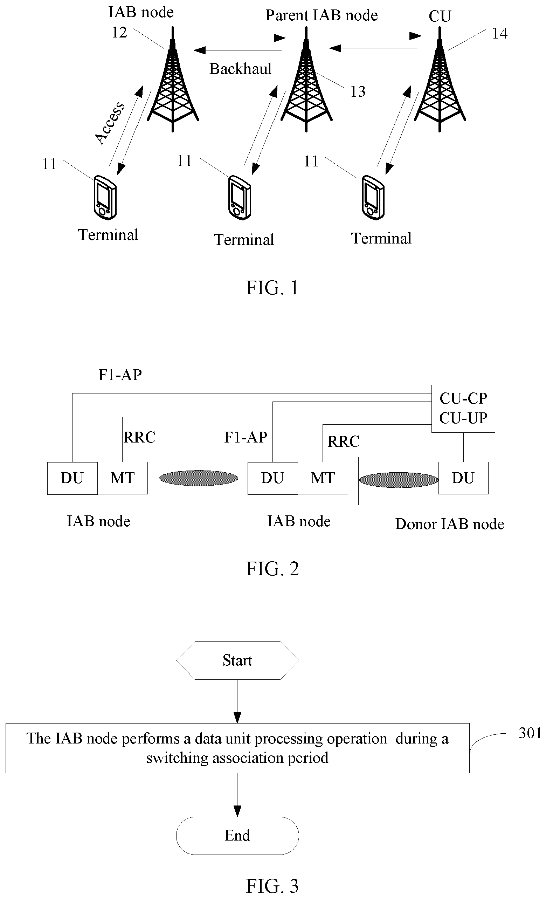

FIG. 1 is a schematic diagram of a wireless communications system to which an embodiment of this application can be applied. The wireless communication system includes a terminal 11, an IAB node (IAB node) 12, a parent IAB node (parent IAB node) 13, and a centralized unit (Centralized Unit, CU) 14.

In the above system, the IAB node 12 can rely on MT to find the parent IAB node 13, and establish a wireless connection with a DU of the parent IAB node 13. This wireless connection is called a backhaul link of the IAB node 12 and becomes an access link of the parent IAB node 13. After establishing a complete backhaul link, the IAB node 12 turns on its DU function, and the DU provides cell services, that is, the DU can provide the terminal 11 with access services. All DUs of IAB nodes can be connected to the CU 14.

In addition, as shown in FIG. 2, the CU can configure the DU of the IAB node through an F1 control plane interface (F1-C) (F1 application process protocol (F1-AP)) protocol. The CU can configure the MT of the IAB node through the radio resource control (Radio Resource Control, RRC) protocol. In addition, the CU 14 may be a donor IAB node or a separate network node, and specifically may include: CU-control plane (control plane, CP) and CU-user plane (user plane, UP).

It should be noted that, FIG. 1 is only illustrated by taking the terminal 11, the IAB node 12, the parent IAB node 13, and the CU 14 as examples, and the embodiment of this application does not limit the number of IAB nodes in practical applications.

In addition, the terminal 11 can also be called a terminal device or a user equipment (User Equipment, UE), and the terminal 11 can be a mobile phone, a tablet computer (Tablet Personal Computer), a laptop computer (Laptop Computer) or a notebook computer, a personal digital Assistant (Personal Digital Assistant, PDA), a handheld computer, a netbook, an ultra-mobile personal computer (ultra-mobile personal computer, UMPC), a mobile Internet device (Mobile Internet Device, MID) or a vehicle terminal (Vehicle User Equipment, VUE), pedestrian terminals (Pedestrian User Equipment, PUE), reduced-capacity terminals (Reduced Capacity User Equipment, RedCap UE) and other terminal side devices. The RedCap UE can include: wearable devices, industrial sensors, video surveillance equipment, etc., and wearable devices include: bracelets, headphones, glasses, etc. It should be noted that a specific type of the terminal 11 is not limited in this embodiment of this application.

The resource configuration method and apparatus, network node, and storage medium provided by the embodiments of this application will be described in detail below through specific embodiments and application scenarios with reference to the accompanying drawings.

Please refer to FIG. 3. FIG. 3 is a flowchart of a data unit processing method provided in the embodiment of this application. As shown in FIG. 3, it includes the following steps:

Step 301: An IAB node performs a data unit processing operation during a switching association period, where the data unit processing operation includes at least one of the following:
retaining a first BAP PDU having no matching BAP routing configuration in the IAB node;
routing, to a target donor DU, a second BAP PDU whose target BAP address is an original donor DU; and
performing processing according to a BAP routing identifier in a third BAP PDU, where the third BAP PDU includes two BAP routing identifiers.

The original donor DU is a donor DU of the IAB node before switching execution, and the target donor DU is a donor DU of the IAB node after switching execution and is also called a new donor DU. The original donor DU and the target donor DU may belong to the same CU, or may belong to different CUs.

The switching can be switching between different donor DUs in the same CU, that is, switching between donor DUs in the same CU; or the switching can be switching between different CU, that is, switching from one CU to another CU.

That is, the switching association period may include the following items:
a period associated with a switching process of switching from the original donor DU to the target donor DU in a same CU by the IAB node; and
a period associated with a switching process of switching from an original CU to a target CU by the IAB node, where the original donor DU is a DU belonging to the original CU, and the target donor DU is a DU belonging to the target CU.

The original CU may be the original donor CU, and the target CU may be the target donor CU.

In some embodiments of this application, when the IAB node is switched from the original CU to the target CU, the BAP entity (entity) of the IAB node can be rebuilt, and the BAP addresses and BAP routes of the IAB node and its downstream IAB nodes can be changed. After the IAB node switches from the original donor-DU to the target donor-DU of the same CU, the BAP route can be reconfigured, for example: the BAP path (BAP path) of the downlink data is reconfigured to the BAP path of the target donor-DU to the IAB node; the target BAP address of the upstream data is reconfigured to switch from the address of the original donor DU to the address of the target donor DU.

In the embodiment of this application, both the original CU and the original donor DU can represent the original control node of the mobile IAB system; both the target CU and the original donor DU can represent the target control node of the mobile IAB system.

The switching association period may include: at least one of a preset period before the switching process and a preset period after the switching process.

For the first BAP PDU, the BAP routing configuration matching the BAP PDU may not be found in the IAB node, for example: the IAB node cannot find a forwarding route that can reach the destination address of the first BAP PDU. In this way, the IAB node cannot route the BAP PDU, and the first BAP PDU is retained according to the processing operation, so as to avoid discarding the first BAP PDU.

The processing according to a BAP routing identifier in the third BAP PDU may be that the third BAP PDU includes two BAP routing identifiers, where different BAP routing identifiers indicate routing to different donor DUs, so that according to the processing operation, processing may be performed according to one BAP routing identifier, to avoid that the BAP PDU only includes one BAP routing identifier and the IAB node cannot perform routing according to the BAP routing identifier, resulting in discarding.

In addition, in the embodiment of this application, the IAB node may perform the data unit processing operation according to the received indication, or it may be pre-configured that the IAB node performs the data unit processing operation during the switching association period, which can reduce transmission overheads because no indication needs to be sent. In addition, uninterrupted data transmission during the switching process can be realized due to the execution of the data unit processing operation.

In the embodiment of this application, through the above steps, the IAB node can perform the data unit processing operation during the switching association period, thereby reducing or even avoiding the discarding of BAP PDUs, thereby improving the transmission performance of the IAB node.

As an optional implementation, the method also includes at least one of:
receiving, by the IAB node, a first indication sent by the original CU or the original donor DU, where the first indication is used to indicate to stop discarding the first BAP PDU;
receiving, by the IAB node, a second indication sent by the target CU or the target donor DU, where the second indication is used to indicate to stop discarding the first BAP PDU; and
receiving, by the IAB node, a third indication sent by the target CU or the target donor DU, where the third indication is used to instruct to route the second BAP PDU to the target donor DU.

The stopping discarding the first BAP PDU may be stopping a discarding behavior of discarding the BAP PDU because no matching BAP route can be found, so that in a period of time before and/or after the switching, the IAB node retains the first BAP PDU for which no matching BAP routing configuration is found.

The routing of the second BAP PDU to the target donor DU may be that the IAB node reroutes the old BAP PDU to the target donor DU according to the new BAP routing configuration.

In the above implementation, the data unit processing operation can be performed according to at least one of the first indication, the second indication, and the third indication, so as to ensure the consistency of understanding between the IAB node and the donor DU and CU, thereby improving transmission performance of the IAB system.

Optionally, at least one of the first indication, the second indication and the third indication is carried in a switching command or received before switching starts; or
at least one of the first indication, the second indication and the third indication is received after switching is completed.

In this implementation, it may be realized that the first indication, second indication and third indication may be acquired from the switching command, before the switching, or after the switching. For example: the target CU notifies each switching IAB node before switching, and routes the old BAP PDU to the target donor DU, or the target CU sends a notification to each switching IAB node after confirming that all switching IAB nodes have completed switching, and routes the old BAP PDU to the target donor DU.

As an optional implementation manner, the switching association period includes a first period after the switching is completed, and the method further includes:
in a case that the first period ends, receiving, by the IAB node, a fourth indication sent by the target CU or the target donor DU, where the fourth indication instructs to stop performing the data unit processing operation.

In this implementation, when the first period ends, the execution of the data unit processing operation can be stopped in time according to the fourth indication, so as to restore normal BAP PDU abnormality detection in time. Certainly, in some implementations, after the first period ends, the IAB node may also perform the data unit processing operation by itself.

As an optional implementation manner, the switching association period includes a first period after the switching is completed, the IAB node retains a BAP address of the original donor DU during the first period, and after the first period ends, the IAB node removes the BAP address of the original donor DU.

In this embodiment, since the IAB node retains the BAP address of the original donor DU, the IAB node can accurately identify BAP PDUs that were originally sent to the original donor DU, and these BAP PDUs can be sent to the target donor DU through the above processing operation, so as to further improve the transmission performance of IAB nodes. In addition, since the IAB node removes the BAP address of the original donor DU after the end of the first period, the normal BAP PDU abnormality detection can be restored in time, and the storage consumption of the IAB can also be reduced.

As an optional implementation manner, the routing, to a target donor DU, a second BAP PDU whose target BAP address is an original donor distributed unit DU includes:
performing a rewriting operation on the second BAP PDU, and routing the second BAP PDU after the rewriting operation to the target donor DU, where the rewriting operation includes at least one of the following:
rewriting a first routing identifier of the second BAP PDU to a second routing identifier, where the first routing identifier is used to route to the original donor DU, and the second routing identifier is used to route to the target donor DU; and
rewriting a BAP path of the second BAP PDU to a BAP path of the target donor DU.

The routing identifier can be a BAP routing identifier (routing ID), and the rewriting of the first routing identifier of the second BAP PDU to the second routing identifier can be to rewrite the BAP routing ID in the BAP header of the BAP PDU to the BAP routing ID of the target donor DU, so as to send the rewritten BAP PDU to the target donor DU. Rewriting the BAP routing ID includes rewriting the destination BAP address of the BAP PDU to the address of the target donor DU.

Rewriting of the BAP path of the second BAP PDU to the BAP path of the target donor DU may be to rewrite the BAP path of the BAP routing ID to the BAP path of the target donor DU.

In this embodiment, the second BAP PDU can be routed to the target donor DU through the above rewriting operation, so as to avoid discarding the second BAP PDU and improve the transmission performance of the IAB node.

As an optional implementation manner, the performing processing according to a BAP routing identifier in the third BAP PDU includes one of the following:
modifying the third BAP PDU to a BAP PDU including only one BAP routing identifier, and transmitting according to the one BAP routing identifier;
in a case that the third BAP PDU includes a BAP routing identifier for routing to the original donor DU, and includes a BAP routing identifier for routing to the target donor DU, routing the third BAP PDU to the original donor DU or the target donor DU; and
in a case that a BAP address carried by a BAP routing identifier included in the third BAP PDU is the BAP address of the IAB node, buffering the third BAP PDU or delivering, to an upper layer, a service data unit (service data unit, SDU) carried by the third BAP PDU.

The above modification of the third BAP PDU to a BAP PDU including only one BAP routing identifier may be to delete the BAP routing identifier currently not supported by the IAB node and included in the third BAP PDU, for example: a routing identifier used for routing to the original donor DU and included in the BAP header of the third BAP PDU is removed, to retain the BAP routing identifier supported by the IAB node and transmit according to the BAP routing identifier. Of course, in some cases, the IAB node may support two BAP routing identifiers included in the third BAP PDU, so that any BAP routing identifier can be deleted.

The routing of the third BAP PDU to the original donor DU or the target donor DU may be routing the third BAP PDU to the original donor DU or the target donor DU according to actual needs.

The buffering of the third BAP PDU or submitting, to the upper layer, the SDU carried by the third BAP PDU may be: for a downlink BAP PDU, after the IAB node receives the BAP PDU, if the BAP address of the IAB node matches a BAP address carried by any BAP routing ID, data is submitted to the upper layer, or the BAP entity of the IAB node can determine, based on the matching BAP routing ID, whether to buffer the data or send the data directly to the upper layer.

In this embodiment, the third BAP PDU can be processed according to a BAP routing ID in the third BAP PDU, so as to avoid discarding the BAP PDU.

Optionally, the third BAP PDU further includes a fifth indication for indicating that the third BAP PDU includes two BAP routing IDs.

In this embodiment, it can be determined through the fifth indication that the third BAP PDU includes two BAP routing identifiers, so that the IAB node can process the third BAP PDU according to the data unit processing operation described in the above embodiment.

Further, in the case of modifying the third BAP PDU to a BAP PDU that only includes one BAP routing identifier and transmitting according to the one BAP routing identifier, the method may further include: modifying the fifth indication to indicate that the third BAP PDU includes one BAP routing identifier.

As an optional implementation manner, in a case that the switching association period includes a period associated with a switching process of switching from the original CU to the target CU by the IAB node, the third BAP PDU also includes a sixth indication, and the sixth indication is used to indicate that the third BAP PDU is generated according to encryption information of the original CU, or is used to indicate that the third BAP PDU is generated according to encryption information of the target CU.

The encrypted information may include a ciphering key (ciphering key).

In this embodiment, the encryption information of the third BAP PDU can be indicated through the sixth indication, so that the terminal or CU receives the third BAP PDU and deciphers the third BAP PDU in a corresponding manner to improve reliability of the third BAP PDU.

Optionally, when the third BAP PDU is a downlink BAP PDU, the method further includes:
indicating, by the IAB node, to the terminal that the third BAP PDU is generated according to the encryption information of the original CU, or indicating that the third BAP PDU is generated according to the encryption information of the target CU.

Indicating the above content to the terminal may be indicating in an explicit or implicit manner, for example: the IAB may indicate the above content to the terminal through packet data convergence protocol (Packet Data Convergence Protocol, PDCP) configuration, for example, a radio network temporary identity (Radio Network Temporary Identity, RNTI) or a dedicated logical channel (Logical Channel, LCH) is used to schedule transmission of the PDCP PDU generated by the original CU, so that the terminal can identify that the PDCP is generated based on the encryption information configured by the original CU or the new CU, and then corresponding information may be used to complete the deciphering.

In this implementation, since the above content is indicated to the terminal, it is helpful for the terminal to accurately decipher the BAP PDU.

As an optional implementation manner, the third BAP PDU includes:
a BAP routing identifier containing only a BAP address; and
a BAP routing identifier containing a BAP address and a BAP path.

In this embodiment, it can be realized that a BAP routing ID of the third BAP PDU includes only the BAP address, and another BAP routing ID includes the BAP address and the BAP path. For example: the BAP routing ID routed to the original donor DU contains only the BAP address, while the BAP routing ID routed to the target donor DU contains the BAP address and BAP path, the BAP routing ID routed to the target donor DU contains only the BAP address, and the BAP routing ID routed to the original donor DU includes the BAP address and the BAP path.

In this embodiment, since a BAP routing ID only includes the BAP address, that is, the BAP path can be omitted, thereby reducing the overheads of the BAP PDU.

As an optional implementation, the third BAP PDU includes a third BAP routing identifier configured by the original CU and a fourth BAP routing identifier configured by the target CU, and a sequence of the third BAP routing identifier and the fourth BAP routing identifier is used to indicate that the third BAP PDU is generated by the original CU or the target CU.

In this embodiment, when generating a BAP PDU including double BAP routing IDs, the order of the BAP routing IDs in the BAP header can be used to identify whether the PDCP PDU carried by the BAP PDU is generated by the PDCP entity configured by the original CU or generated by the PDCP configured by the target CU. For example, if the BAP routing ID for routing to the original donor DU is placed before the BAP routing ID for routing to the target donor DU, it means that the BAP PDU is generated by the PDCP entity configured by the original CU.

In this implementation, since the order indicates that the third BAP PDU is generated by the original CU or the target CU, the overheads of the third BAP PDU can be reduced.

As an optional implementation, the method also includes at least one of the following:
in a case that the IAB node receives a fourth BAP PDU, routing the fourth BAP PDU to the target donor DU, where a target BAP address of the fourth BAP PDU matches the BAP address of the target donor DU;
in a case that the IAB node receives a fifth BAP PDU, discarding the fifth BAP PDU, where a target BAP address of the fifth BAP PDU does not match the BAP address of the original donor DU, and does not match the BAP address of the target donor DU; and
in a case that the IAB node receives a sixth BAP PDU, discarding the sixth BAP PDU, where a target BAP address of the sixth BAP PDU does not match at least one of the following:
   an old BAP address of an IAB node that BAP routing configuration of the IAB node can reach;
   a new BAP address of an IAB node that BAP routing configuration of the IAB node can reach; and
   the BAP address of the IAB node.

In this implementation, if the destination BAP address carried by a BAP PDU matches the BAP address of the target donor DU, the BAP PDU is directly sent to the target donor DU. If the destination BAP address carried by the received uplink BAP PDU neither matches the BAP address of the original donor DU and nor matches the BAP address of the target donor DU, it is determined that the BAP PDU is an abnormal BAP PDU, and the BAP PDU is discarded. If the destination BAP address carried by the received downlink BAP PDU matches neither the old BAP address nor the new BAP address of any access IAB node that can be reached by the BAP routing configuration of the IAB node, the BAP PDU is discarded, or if the destination BAP address of the received downlink BAP PDU is not the BAP address of the IAB node, the BAP PDU is discarded.

In this embodiment of this application, an IAB node performs a data unit processing operation during a switching association period, where the data unit processing operation includes at least one of the following: retaining a first BAP protocol data unit PDU having no matching BAP routing configuration in the IAB node; routing, to a target donor DU, a second BAP PDU whose target BAP address is an original donor distributed unit DU; and performing processing according to a BAP routing identifier in a third BAP PDU, where the third BAP PDU includes two BAP routing identifiers. This can reduce the discarding of BAP PDUs, thereby improving the transmission performance of the IAB node.

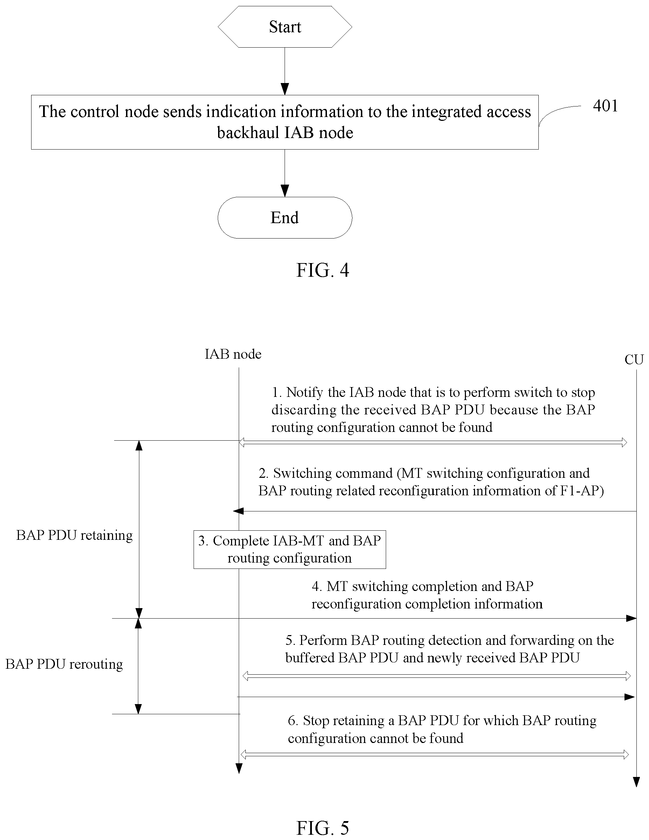

Please refer to FIG. 4. FIG. 4 is a flowchart of another data unit processing method provided in the embodiment of this application. As shown in FIG. 4, it includes the following steps:

Step 401: A control node sends indication information to an integrated access backhaul IAB node, where the indication information is used to instruct the IAB node to perform a data unit processing operation during a switching association period, where the data unit processing operation includes at least one of the following:
retaining a first BAP protocol data unit PDU having no matching backhaul adaptation protocol BAP routing configuration in the IAB node;
routing, to a target donor DU, a second BAP PDU whose target BAP address is an original donor distributed unit DU; and
performing processing according to a BAP routing identifier in a third BAP PDU, where the third BAP PDU includes two BAP routing IDs.

Optionally, the control node includes one of the following item:
the original donor DU, the target donor DU, an original control unit CU, and a target CU.

For the switching association period and the data unit processing operation, reference may be made to the corresponding description of the embodiment shown in FIG. 3, which will not be repeated here.

In this embodiment, the indication information instructs the IAB node to perform a data unit processing operation during the switching association period, so that the transmission performance of the IAB node can be improved.

Optionally, when the control node includes the original CU or the original donor DU, the method further includes:
sending, by the control node, the BAP address of the original donor DU to the target donor DU or the target CU.

In this embodiment, since the BAP address of the original donor DU is sent to the target donor DU or the target CU, the BAP address of the original donor DU sent to the target donor DU or the target CU can instruct the IAB node to use the above data unit processing operation for the BAP PDU whose target address is the original donor DU, to avoid discarding these BAP PDUs.

Optionally, when the control node includes the original CU or the original donor DU, the method further includes:
sending, by the control node, a request message to the target donor DU or the target CU, where the request message is used to request to perform data lossless switching; and
the sending, by the control node, indication information to the integrated access backhaul IAB node includes:
   in a case that the control node receives a response message that is returned by the target donor DU or the target CU and that agrees to the request message, sending, by the control node, the indication information to the integrated access backhauled IAB node.

The request to perform data lossless switching refers to requesting the target donor DU or the target CU to perform the operation corresponding to the IAB node, so as to avoid discarding the BAP PDU and achieve data lossless switching.

Optionally, the method also includes at least one of:
in a case that the control node includes the original CU or the original donor DU, sending, by the control node, a first indication to the IAB node, where the first indication is used to indicate to stop discarding the first BAP PDU;
in a case that the control node includes the target CU or target donor DU, sending, by the control node, a second indication to the IAB node, where the second indication is used to indicate to stop discarding the first BAP PDU; and
in a case that the control node includes the target CU or the target donor DU, sending, by the control node, a third indication to the IAB node, where the third indication is used to indicate to route the second BAP PDU to the target donor DU.

Optionally, at least one of the first indication, the second indication and the third indication is carried in a switching command or sent before switching starts; or
at least one of the first indication, the second indication and the third indication is sent after switching is completed.

For the above first indication, second indication and third indication, reference may be made to the corresponding description of the embodiment shown in FIG. 3, which will not be repeated here.

Optionally, the switching association period includes a first period after the switching is completed, and the method further includes:
in a case that the first period ends, send, by the control node, an indication for stopping performing the data unit processing operation to the IAB node.

For the above indication for stopping execution of the data unit processing operation, reference may be made to the corresponding description of the embodiment shown in FIG. 3, which will not be repeated here.

Optionally, in a case that the switching association period includes a period associated with a switching process of switching from the original CU to the target CU by the IAB node, the third BAP PDU also includes a sixth indication, and the sixth indication is used to indicate that the third BAP PDU is generated according to encryption information of the original CU, or is used to indicate that the third BAP PDU is generated according to encryption information of the target CU.

For the above sixth indication, reference may be made to the corresponding description of the embodiment shown in FIG. 3, which will not be repeated here.

Optionally, when the control node includes the target CU, the method further includes:
in a case that the control node receives the third BAP PDU, and the sixth indication is used to indicate that the third BAP PDU is generated according to encryption information of the original CU, sending, by the control node, the third BAP PDU to the original CU;
receiving, by the control node, data that is sent by the original CU and that is for deciphering the third BAP PDU;
   or
in a case that the control node includes the original CU, the method further includes:
   in a case that the control node receives the third BAP PDU, and the sixth indication is used to indicate that the third BAP PDU is generated according to encryption information of the target CU, sending, by the control node, the third BAP PDU to the target CU; and
   receiving, by the control node, data that is sent by the target CU and that is for deciphering the third BAP PDU.

In this embodiment, the data of the third BAP PDU can be accurately deciphered through the interaction between the original CU and the target CU.

Optionally, when the control node includes the target CU or target donor DU, the method further includes:
in a case that the control node receives an abnormal BAP PDU, discard the abnormal BAP PDU, where a destination BAP address carried by the abnormal BAP PDU does not match the BAP address of the control node and does not match the BAP address of the original donor DU or the original CU.

In this embodiment, the control node can discard abnormal BAP PDUs.

It should be noted that this embodiment is used as an implementation of the control node side corresponding to the embodiment shown in FIG. 3. For a specific implementation, refer to the related descriptions of the embodiment shown in FIG. 3. To avoid repeated descriptions, details are not described again in this embodiment. In this embodiment, the transmission performance of the IAB node can also be improved.

The data unit processing method provided by the embodiment of this application is illustrated below through multiple embodiments:

### Embodiment 1:

This embodiment mainly describes the switching process of switching a donor DU in the same CU (intra-CU inter-donor DU) without BAP PDU loss, which may be specifically shown in FIG. 5. FIG. 5 shows the switching process of switching a donor DU in the same CU without data.

As shown in step 1 shown in FIG. 5, before switching the donor DU in the same CU, the CU sends a notification message to the IAB node that is to perform switch, to notify the IAB node that is to perform switch to stop discarding the received BAP PDU because it cannot find the BAP routing configuration. After receiving the message, the IAB node buffers the received BAP PDU for which the BAP routing configuration cannot be found, until the IAB node receives new BAP routing related configuration information delivered by the CU. That the BAP routing configuration cannot be found here means that a forwarding route that can reach the destination address of the BAP PDU cannot be found.

As shown in steps 2, 3, and 4 shown in FIG. 5, the IAB node receives a switching command, and the switching command can include a switching configuration of the MT and BAP routing reconfiguration information of the F1-AP. The IAB node completes IAB- MT and BAP routing configuration according to the switching command; then, the IAB node sends MT switching completion and BAP reconfiguration completion information to the CU. After switching, the IAB node saves the BAP address of the original donor-DU.

As shown in step 5 shown in FIG. 5, the IAB node (the IAB node can be the switching IAB node, or the downstream node of the switching IAB node) performs BAP routing detection and forwarding for the buffered BAP PDU and the newly received BAP PDU according to the following method:
Method 1: If the destination BAP address carried by a BAP PDU matches the BAP address of the original donor DU, the BAP routing ID in the BAP header of the BAP PDU is rewritten to the BAP routing ID of the target donor DU (or a new donor DU), the rewritten BAP PDU is sent to the target donor DU. Rewriting the BAP routing ID includes rewriting the destination BAP address of the BAP PDU to the address of the target donor DU, and/or rewriting the BAP path of the BAP PDU to BAP path of the target donor DU.
Method 2: If the destination BAP address carried by a BAP PDU matches the BAP address of the target donor DU, the BAP PDU is directly sent to the target donor DU.

An intermediate IAB node after switching determines whether the buffered or received BAP PDU is discarded as follows:
Method 3: If the destination BAP address carried by the received uplink BAP PDU matches neither the BAP address of the original donor DU nor the BAP address of the target donor DU, the BAP PDU is regarded as an abnormal BAP PDU, and the BAP PDU is discarded.
Method 4: If the destination BAP address carried by the received downlink BAP PDU matches neither the old BAP address nor the new BAP address of any access IAB node that can be reached by the BAP routing configuration of the IAB node, the BAP PDU is discarded.

The target donor DU determines whether the received BAP PDU is discarded as follows:
Method 5: If the destination BAP address carried by the BAP PDU received by a donor DU node matches neither the BAP address of the donor DU node nor the BAP address of the original donor DU, the BAP PDU is regarded as an abnormal BAP PDU, and the BAP PDU is discarded.

This embodiment also includes that the original CU node sends the BAP address of the original donor DU to the target donor DU node.

As shown in step 6 shown in FIG. 5, the CU sends, to the switching IAB node, a BAP PDU for which the BAP routing configuration cannot be found and that is no longer retained, and the IAB node removes the BAP address of the original donor DU, and resumes normal BAP PDU abnormality detection.

It should be noted that step 1 of this embodiment is an optional step, for example: in the case that the switching IAB node has not received a data buffer notification of the original CU, after receiving the switching command, the BAP address of the original donor DU is still retained for forwarding processing of the buffered BAP data, and the switching IAB node removes the BAP address of the original donor DU by itself after a period of time since the switching of this node is completed.

In particular, step 6 of this embodiment is an optional step, and the switching IAB node removes the BAP address of the original donor DU after a period of time since the switching of this node is completed.

### Embodiment 2:

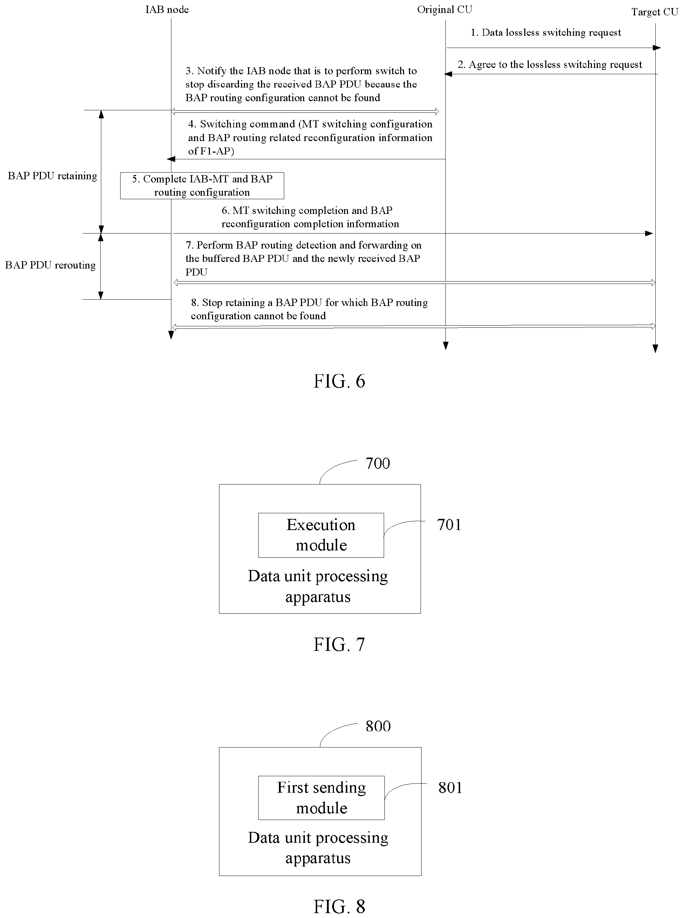

This embodiment describes an example in which the switching process of switching a donor DU between different CUs (inter-CU inter-donor DU) without BAP PDU loss, as shown in FIG. 6. FIG. 6 shows an example of the process of switching a donor DU between different CUs without data loss.

This embodiment is applicable to the situation of lossless data transmission in the process of inter-CU switching. FIG. 6 shows that the original donor DU and the target donor DU are omitted.

As shown in step 1 shown in FIG. 6, the original CU initiates a data lossless switching request to the target CU. This request indicates that each switching IAB node supports data lossless switching, and the target CU can agree or reject the data lossless switching request when responding to this request.

As shown in step 2 shown in FIG. 6, if the lossless switching request is agreed, an indication for agreeing to start the data lossless switching request is sent to the original CU. After receiving this indication, the original CU sends a notification of starting a data lossless switching mode to each switching IAB node, to notify the IAB node that is to perform switch to stop discarding the received BAP PDU because the BAP routing configuration cannot be found.

As shown in step 3 shown in FIG. 6, after receiving the message, an IAB node should buffer the received BAP PDU for which the BAP routing configuration cannot be found.

As shown in steps 4, 5, and 6 shown in FIG. 6, the IAB node receives a switching command, and the switching command includes a switching configuration of the MT and BAP routing reconfiguration information of the F1-AP. The completes IAB- MT and BAP routing configuration according to the switching command; then, the IAB node sends MT switching completion and BAP reconfiguration completion information to the CU. After switching, the IAB node saves the BAP address of the original donor-DU.

As shown in step 7 shown in FIG. 6, the IAB node performs BAP routing detection on the buffered BAP PDU and the newly received BAP PDU. The detection process may be similar to the detection process of processing the buffered data shown in embodiment 1, and therefore details are not described here. In particular, when the access IAB node performs BAP address matching detection on the received BAP PDU, if the BAP address carried by the BAP PDU matches its new BAP address or old BAP address, it submits the BAP SDU to the upper layer.

As shown in step 8 shown in FIG. 6, after the target CU confirms that the switching transition time is over, the target CU sends, to the switching IAB node, a BAP PDU for which the BAP routing configuration cannot be found and that is no longer retained, and the IAB node removes the BAP address of the original donor DU, and resumes normal BAP PDU abnormality detection.

In particular, it should be noted that steps 1 and 2 of this embodiment are optional steps. The original CU can configure the BAP PDU buffering by itself during the switching process of the switching IAB node. After the BAP reconfiguration is completed, the switching IAB node performs data forwarding for the buffered BAP PDU according to step 7.

In particular, it should be noted that step 1, 2, and 3 of this embodiment are all optional steps, in the case that the switching IAB node has not received a data buffer notification of the original CU, after receiving the switching command, the BAP address of the original donor DU is still retained for forwarding processing of the buffered BAP data, and the switching IAB node removes the BAP address of the original donor DU by itself after a period of time since the switching of this node is completed.

In particular, step 8 of this embodiment is an optional step, and the switching IAB node removes the BAP address of the original donor DU after a period of time since the switching of this node is completed.

In particular, the data lossless switching request initiated by the original CU to the target CU may include the BAP address of the original donor DU.

It should be noted that, for the sake of simplicity, the target donor DU and the original donor DU node in FIG. 6 are omitted. Before switching of the IAB node, the signaling and data interaction between the CU and the IAB node is realized through the original donor DU. After switching of the IAB node, the IAB node performs signaling and data interaction with the new CU through the new donor DU.

### Embodiment 3:

In this embodiment, the BAP PDU forwarding process based on double BAP routing is illustrated as follows:
In this embodiment, the original CU or the target CU can configure a switching IAB node to use the data sending process of the double BAP routing for a period of time after switching, and return to the data sending process of the single BAP routing after the switching is completed. Double BAP routing means that the same BAP PDU contains both the BAP routing ID for routing to the original donor DU and the BAP routing ID for routing to the target donor DU. At the same time, the BAP header contains an indication indicating whether the BAP PDU carries one BAP routing ID or two BAP routing IDs. After an IAB node receives such a BAP PDU, if the BAP address carried in any BAP routing ID can be found in the BAP routing configuration of the IAB node, the BAP PDU is not discarded.

For uplink data, after receiving the BAP PDU containing double BAP routing, the IAB node switching an IAB network can remove the route to the original donor DU in the BAP header of the BAP PDU, reset the double BAP routing ID indication, change the BAP PDU to a BAP PDU with a single BAP routing ID, and continue to transmit.

The BAP PDU of double BAP routing can also be sent directly to the target/original donor DU node and the target/original donor node. If the BAP address carried in any BAP routing ID matches the BAP address of the donor DU, the data is submitted to the upper layer.

For a downlink BAP PDU, after the access IAB node receives the BAP PDU, if the BAP address of the access IAB node matches a BAP address carried by any BAP routing ID, data is submitted to the upper layer. Optionally, the BAP entity can determine, based on the matching BAP routing ID, whether to buffer the data or send the data directly to the upper layer.

Optionally, for inter-CU switching, the BAP header may also indicate whether the carried BAP PDU is generated according to the PDCP ciphering key (ciphering key) before the switching or the PDCP ciphering key after the switching.

For uplink data, the target donor DU can determine whether PDCP deciphering (deciphering) should be completed by the original CU or by itself. If the original donor CU needs to complete it, the data is sent to the target CU, the target CU forwards the data to the original CU through Xn, and after the original CU completes PDCP deciphering, the data is forwarded to the target CU. Similarly, after the original donor DU receives a BAP PDU, it can also determine whether the carried PDCP PDU needs the original CU or the target CU to complete PDCP deciphering. If the original CU completes deciphering, the PDCP SDU after deciphering of the PDCP PDU is forwarded to the original CU; otherwise, the PDCP PDU is sent to the new CU, and the target CU completes the deciphering.

For downlink data, the access IAB node can indicate the PDCP configuration, for example, a temporary RNTI or a dedicated LCH is used to schedule transmission of the PDCP PDU generated by the original CU. The UE recognizes that the PDCP is generated based on the ciphering key configured by the original CU or the new CU, and then uses the corresponding key to complete deciphering.

When regenerating a PDU of double BAP routing IDs, the order of the BAP routing IDs in the BAP header is fixed to identify whether the PDCP PDU carried by the BAP PDU is generated by the PDCP entity configured by the original CU or configured by the target CU. For example, if the BAP routing ID for routing to the original donor DU is placed before the BAP routing ID for routing to the target donor DU, it means that the BAP PDU is generated by the PDCP entity configured by the original CU.

The double BAP routing method can be used to switch the BAP routing of the IAB network during the switching process of intra-CU inter-donor DU. A receiving IAB node determines, based on any BAP routing ID, whether it is a terminal IAB node of the BAP PDU or forwards the BAP PDU. Compared with the switching between CUs, switching double BAP headers under the donor DU in the same CU does not need to indicate the PDCP ciphering key, because a receiving and sending PDCP entity of the PDCP carried by the BAP PDU has not changed before and after the switching.

Optionally, one of the BAP routing IDs in the BAP PDU may only contain the BAP address, that is, the BAP path may be omitted.

Please refer to FIG. 7. FIG. 7 is a structural diagram of a data unit processing apparatus provided in an embodiment of this application. As shown in FIG. 7, the data unit processing apparatus 700 includes:
an execution module 701, configured to perform a data unit processing operation during a switching association period, where the data unit processing operation includes at least one of the following:
retaining a first B BAP protocol data unit PDU having no matching backhaul adaptation protocol BAP routing configuration in the integrated access backhaul IAB node;
routing, to a target donor DU, a second BAP PDU whose target BAP address is an original donor distributed unit DU; and
performing processing according to a BAP routing identifier in a third BAP PDU, where the third BAP PDU includes two BAP routing IDs;
where the IAB node includes the apparatus.

Optionally, the switching association period includes one of the following item:
a period associated with a switching process of switching from the original donor DU to the target donor DU in a same centralized unit CU by the IAB node; and
a period associated with a switching process of switching from an original CU to a target CU by the IAB node, where the original donor DU is a DU belonging to the original CU, and the target donor DU is a DU belonging to the target CU.

Optionally, the apparatus also includes at least one of:
a first receiving module, configured to receive a first indication sent by the original CU or the original donor DU, where the first indication is used to indicate to stop discarding the first BAP PDU;
a second receiving module, configured to receive a second indication sent by the target CU or the target donor DU, where the second indication is used to indicate to stop discarding the first BAP PDU; and
a third receiving module, configured to receive a third indication sent by the target CU or the target donor DU, where the third indication is used to instruct to route the second BAP PDU to the target donor DU.

Optionally, at least one of the first indication, the second indication and the third indication is carried in a switching command or received before switching starts; or
at least one of the first indication, the second indication and the third indication is received after switching is completed.

Optionally, the switching association period includes a first period after the switching is completed, and the apparatus further includes:
a fourth receiving module, configured to: in a case that the first period ends, receive a fourth indication sent by the target CU or the target donor DU, where the fourth indication instructs to stop performing the data unit processing operation.

Optionally, the switching association period includes a first period after the switching is completed, the IAB node retains a BAP address of the original donor DU during the first period, and after the first period ends, the IAB node removes the BAP address of the original donor DU.

Optionally, the routing, to a target donor DU, a second BAP PDU whose target BAP address is an original donor distributed unit DU includes:
performing a rewriting operation on the second BAP PDU, and routing the second BAP PDU after the rewriting operation to the target donor DU, where the rewriting operation includes at least one of the following:
rewriting a first routing identifier of the second BAP PDU to a second routing identifier, where the first routing identifier is used to route to the original donor DU, and the second routing identifier is used to route to the target donor DU; and
rewriting a BAP path of the second BAP PDU to a BAP path of the target donor DU.

Optionally, the performing processing according to a BAP routing identifier in the third BAP PDU includes one of the following:
modifying the third BAP PDU to a BAP PDU including only one BAP routing identifier, and transmitting according to the one BAP routing identifier;
in a case that the third BAP PDU includes a BAP routing identifier for routing to the original donor DU, and includes a BAP routing identifier for routing to the target donor DU, routing the third BAP PDU to the original donor DU or the target donor DU; and
in a case that a BAP address carried by a BAP routing identifier included in the third BAP PDU is the BAP address of the IAB node, buffering the third BAP PDU or delivering, to an upper layer, a service data unit SDU carried by the third BAP PDU.

Optionally, the third BAP PDU further includes a fifth indication for indicating that the third BAP PDU includes two BAP routing identifiers.

Optionally, in a case that the switching association period includes a period associated with a switching process of switching from the original CU to the target CU by the IAB node, the third BAP PDU also includes a sixth indication, and the sixth indication is used to indicate that the third BAP PDU is generated according to encryption information of the original CU, or is used to indicate that the third BAP PDU is generated according to encryption information of the target CU.

Optionally, when the third BAP PDU is a downlink BAP PDU, the apparatus further includes:
an indication module, configured to indicate to the terminal that the third BAP PDU is generated according to the encryption information of the original CU, or indicate that the third BAP PDU is generated according to the encryption information of the target CU.

Optionally, the third BAP PDU includes:
a BAP routing identifier containing only a BAP address; and
a BAP routing identifier containing a BAP address and a BAP path.

Optionally, the third BAP PDU includes a third BAP routing identifier configured by the original CU and a fourth BAP routing identifier configured by the target CU, and a sequence of the third BAP routing identifier and the fourth BAP routing identifier is used to indicate that the third BAP PDU is generated by the original CU or the target CU.

Optionally, the apparatus also includes at least one of the following:
a first processing module, configured to: in a case that a fourth BAP PDU is received, route the fourth BAP PDU to the target donor DU, where a target BAP address of the fourth BAP PDU matches the BAP address of the target donor DU;
a second processing module, configured to: in a case that the IAB node receives a fifth BAP PDU, discard the fifth BAP PDU, where a target BAP address of the fifth BAP PDU does not match the BAP address of the original donor DU, and does not match the BAP address of the target donor DU; and
a third processing module, configured to: in a case that the IAB node receives a sixth BAP PDU, discard the sixth BAP PDU, where a target BAP address of the sixth BAP PDU does not match at least one of the following:
   an old BAP address of an IAB node that BAP routing configuration of the IAB node can reach;
   a new BAP address of an IAB node that BAP routing configuration of the IAB node can reach; and
   the BAP address of the IAB node.

The data unit processing apparatus provided in some embodiments of this application can implement each process in the method embodiment in FIG. 3, which will not be repeated here to avoid repetition, and the transmission performance of the IAB node can be improved.

It should be noted that the data unit processing apparatus in some embodiments of this application may be a device, or may be a component, an integrated circuit, or a chip in an IAB node.

Please refer to FIG. 8. FIG. 8 is a structural diagram of another data unit processing device provided in the embodiment of this application. As shown in FIG. 8, the data unit processing apparatus 800 includes:
a first sending module 801, configured to send indication information to an integrated access backhaul IAB node, where the indication information is used to instruct the IAB node to perform a data unit processing operation during a switching association period, where the data unit processing operation includes at least one of the following:
retaining a first BAP protocol data unit PDU having no matching backhaul adaptation protocol BAP routing configuration in the IAB node;
routing, to a target donor DU, a second BAP PDU whose target BAP address is an original donor distributed unit DU; and
performing processing according to a BAP routing identifier in a third BAP PDU, where the third BAP PDU includes two BAP routing IDs;
where the control node includes the apparatus.

Optionally, the control node includes one of the following item:
the original donor DU, the target donor DU, an original control unit CU, and a target CU.

Optionally, when the control node includes the original CU or the original donor DU, the apparatus further includes:
a second sending module, configured to send the BAP address of the original donor DU to the target donor DU or the target CU.

Optionally, when the control node includes the original CU or the original donor DU, the apparatus further includes:
a third sending module, configured to send a request message to the target donor DU or the target CU, where the request message is used to request to perform data lossless switching; and
the sending indication information to the integrated access backhaul IAB node includes:
   in a case that the control node receives a response message that is returned by the target donor DU or the target CU and that agrees to the request message, sending the indication information to the integrated access backhauled IAB node.

Optionally, the apparatus also includes at least one of:
a fourth sending module, configured to: in a case that the control node includes the original CU or the original donor DU, send a first indication to the IAB node, where the first indication is used to indicate to stop discarding the first BAP PDU;
a fifth sending module, configured to: in a case that the control node includes the target CU or target donor DU, send a second indication to the IAB node, where the second indication is used to indicate to stop discarding the first BAP PDU; and
a sixth sending module, configured to: in a case that the control node includes the target CU or the target donor DU, send a third indication to the IAB node, where the third indication is used to indicate to route the second BAP PDU to the target donor DU.

Optionally, at least one of the first indication, the second indication and the third indication is carried in a switching command or sent before switching starts; or
at least one of the first indication, the second indication and the third indication is sent after switching is completed.

Optionally, the switching association period includes a first period after the switching is completed, and the apparatus further includes:
a seventh sending module, configured to: in a case that the first period ends, send an indication for stopping performing the data unit processing operation to the IAB node.

Optionally, in a case that the switching association period includes a period associated with a switching process of switching from the original CU to the target CU by the IAB node, the third BAP PDU also includes a sixth indication, and the sixth indication is used to indicate that the third BAP PDU is generated according to encryption information of the original CU, or is used to indicate that the third BAP PDU is generated according to encryption information of the target CU.

Optionally, when the control node includes the target CU, the apparatus further includes:
an eighth sending module, configured to: in a case that the third BAP PDU is received, and the sixth indication is used to indicate that the third BAP PDU is generated according to encryption information of the original CU, send the third BAP PDU to the original CU;
a first receiving module, configured to receive data that is sent by the original CU and that is for deciphering the third BAP PDU;
   or
when the control node includes the original CU, the apparatus further includes:
   a ninth sending module, configured to: in a case that the control node receives the third BAP PDU, and the sixth indication is used to indicate that the third BAP PDU is generated according to encryption information of the target CU, sending the third BAP PDU to the target CU; and
   a second receiving module, configured to receive data that is sent by the target CU and that is for deciphering the third BAP PDU;

Optionally, when the control node includes the target CU or target donor DU, the apparatus further includes:
a discarding module, configured to: in a case that the control node receives an abnormal BAP PDU, discard the abnormal BAP PDU, where a destination BAP address carried by the abnormal BAP PDU does not match the BAP address of the control node and does not match the BAP address of the original donor DU or the original CU.

The data unit processing apparatus provided in some embodiments of this application can implement each process in the method embodiment in FIG. 4, which will not be repeated here to avoid repetition, and the transmission performance of the IAB node can be improved.

It should be noted that the data unit processing apparatus in some embodiments of this application may be a device, or may be a component, an integrated circuit, or a chip in a control node.

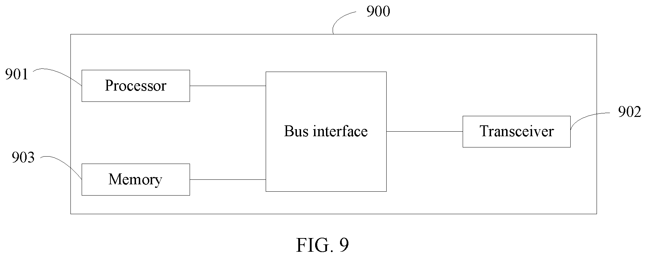

Referring to FIG. 9, FIG. 9 is a structural diagram of a network node provided by an embodiment of this application. As shown in FIG. 9, the network node 900 includes: a processor 901, a transceiver 902, a memory 903, and a bus interface.

In an embodiment, the network node is an IAB node, which may be specifically as follows:

The processor 901 or the transceiver 902 is configured to perform a data unit processing operation during a switching association period, where the data unit processing operation includes at least one of the following:
retaining a first BAP protocol data unit PDU having no matching backhaul adaptation protocol BAP routing configuration in the IAB node;
routing, to a target donor DU, a second BAP PDU whose target BAP address is an original donor distributed unit DU; and
performing processing according to a BAP routing identifier in a third BAP PDU, where the third BAP PDU includes two BAP routing identifiers.

Optionally, the switching association period includes one of the following item:
a period associated with a switching process of switching from the original donor DU to the target donor DU in a same centralized unit CU by the IAB node; and
a period associated with a switching process of switching from an original CU to a target CU by the IAB node, where the original donor DU is a DU belonging to the original CU, and the target donor DU is a DU belonging to the target CU.

Optionally, the transceiver 902 is also configured to perform at least one of:
receiving, by the IAB node, a first indication sent by the original CU or the original donor DU, where the first indication is used to indicate to stop discarding the first BAP PDU;
receiving, by the IAB node, a second indication sent by the target CU or the target donor DU, where the second indication is used to indicate to stop discarding the first BAP PDU; and
receiving, by the IAB node, a third indication sent by the target CU or the target donor DU, where the third indication is used to instruct to route the second BAP PDU to the target donor DU.

Optionally, at least one of the first indication, the second indication and the third indication is carried in a switching command or received before switching starts; or
at least one of the first indication, the second indication and the third indication is received after switching is completed.

Optionally, the switching association period includes a first period after the switching is completed, and the transceiver 902 is further configured to:
in a case that the first period ends, receive a fourth indication sent by the target CU or the target donor DU, where the fourth indication instructs to stop performing the data unit processing operation.

Optionally, the switching association period includes a first period after the switching is completed, the IAB node retains a BAP address of the original donor DU during the first period, and after the first period ends, the IAB node removes the BAP address of the original donor DU.

Optionally, the routing, to a target donor DU, a second BAP PDU whose target BAP address is an original donor distributed unit DU includes:
performing a rewriting operation on the second BAP PDU, and routing the second BAP PDU after the rewriting operation to the target donor DU, where the rewriting operation includes at least one of the following:
rewriting a first routing identifier of the second BAP PDU to a second routing identifier, where the first routing identifier is used to route to the original donor DU, and the second routing identifier is used to route to the target donor DU; and
rewriting a BAP path of the second BAP PDU to a BAP path of the target donor DU.

Optionally, the performing processing according to a BAP routing identifier in the third BAP PDU includes one of the following:
modifying the third BAP PDU to a BAP PDU including only one BAP routing identifier, and transmitting according to the one BAP routing identifier;
in a case that the third BAP PDU includes a BAP routing identifier for routing to the original donor DU, and includes a BAP routing identifier for routing to the target donor DU, routing the third BAP PDU to the original donor DU or the target donor DU; and
in a case that a BAP address carried by a BAP routing identifier included in the third BAP PDU is the BAP address of the IAB node, buffering the third BAP PDU or delivering, to an upper layer, a service data unit SDU carried by the third BAP PDU.

Optionally, the third BAP PDU further includes a fifth indication for indicating that the third BAP PDU includes two BAP routing identifiers.

Optionally, in a case that the switching association period includes a period associated with a switching process of switching from the original CU to the target CU by the IAB node, the third BAP PDU also includes a sixth indication, and the sixth indication is used to indicate that the third BAP PDU is generated according to encryption information of the original CU, or is used to indicate that the third BAP PDU is generated according to encryption information of the target CU.

Optionally, when the third BAP PDU is a downlink BAP PDU, the transceiver 902 is further configured to:
indicate to the terminal that the third BAP PDU is generated according to the encryption information of the original CU, or indicating that the third BAP PDU is generated according to the encryption information of the target CU.

Optionally, the third BAP PDU includes:
a BAP routing identifier containing only a BAP address; and
a BAP routing identifier containing a BAP address and a BAP path.

Optionally, the third BAP PDU includes a third BAP routing identifier configured by the original CU and a fourth BAP routing identifier configured by the target CU, and a sequence of the third BAP routing identifier and the fourth BAP routing identifier is used to indicate that the third BAP PDU is generated by the original CU or the target CU.

Optionally, the processor 901 or the transceiver 902 is also configured to perform at least one of the following:
in a case that the IAB node receives a fourth BAP PDU, routing the fourth BAP PDU to the target donor DU, where a target BAP address of the fourth BAP PDU matches the BAP address of the target donor DU;
in a case that the IAB node receives a fifth BAP PDU, discarding the fifth BAP PDU, where a target BAP address of the fifth BAP PDU does not match the BAP address of the original donor DU, and does not match the BAP address of the target donor DU; and
in a case that the IAB node receives a sixth BAP PDU, discarding the sixth BAP PDU, where a target BAP address of the sixth BAP PDU does not match at least one of the following:
   an old BAP address of an IAB node that BAP routing configuration of the IAB node can reach;
   a new BAP address of an IAB node that BAP routing configuration of the IAB node can reach; and
   the BAP address of the IAB node.

In an embodiment, the network node is a control node, which may be specifically as follows:

The processor 901 or the transceiver 902 is configured to send indication information to an integrated access backhaul IAB node, where the indication information is used to instruct the IAB node to perform a data unit processing operation during a switching association period, where the data unit processing operation includes at least one of the following:
retaining a first BAP protocol data unit PDU having no matching backhaul adaptation protocol BAP routing configuration in the IAB node;
routing, to a target donor DU, a second BAP PDU whose target BAP address is an original donor distributed unit DU; and
performing processing according to a BAP routing identifier in a third BAP PDU, where the third BAP PDU includes two BAP routing identifiers.

Optionally, the control node includes one of the following item:
the original donor DU, the target donor DU, an original control unit CU, and a target CU.

Optionally, when the control node includes the original CU or the original donor DU, the transceiver 902 is further configured to:
send the BAP address of the original donor DU to the target donor DU or the target CU.

Optionally, when the control node includes the original CU or the original donor DU, the transceiver 902 is further configured to:
send a request message to the target donor DU or the target CU, where the request message is used to request to perform data lossless switching; and
the sending indication information to the integrated access backhaul IAB node includes:
   in a case that the control node receives a response message that is returned by the target donor DU or the target CU and that agrees to the request message, sending the indication information to the integrated access backhauled IAB node.

Optionally, the transceiver 902 is also configured to perform at least one of:
in a case that the control node includes the original CU or the original donor DU, sending a first indication to the IAB node, where the first indication is used to indicate to stop discarding the first BAP PDU;
in a case that the control node includes the target CU or target donor DU, sending a second indication to the IAB node, where the second indication is used to indicate to stop discarding the first BAP PDU; and
in a case that the control node includes the target CU or the target donor DU, sending a third indication to the IAB node, where the third indication is used to indicate to route the second BAP PDU to the target donor DU.

Optionally, at least one of the first indication, the second indication and the third indication is carried in a switching command or sent before switching starts; or
at least one of the first indication, the second indication and the third indication is sent after switching is completed.

Optionally, the switching association period includes a first period after the switching is completed, and the transceiver 902 is further configured to:
in a case that the first period ends, send, by the control node, an indication for stopping performing the data unit processing operation to the IAB node.

Optionally, in a case that the switching association period includes a period associated with a switching process of switching from the original CU to the target CU by the IAB node, the third BAP PDU also includes a sixth indication, and the sixth indication is used to indicate that the third BAP PDU is generated according to encryption information of the original CU, or is used to indicate that the third BAP PDU is generated according to encryption information of the target CU.

Optionally, when the control node includes the target CU, the transceiver 902 is further configured to:
in a case that the control node receives the third BAP PDU, and the sixth indication is used to indicate that the third BAP PDU is generated according to encryption information of the original CU, send, by the control node, the third BAP PDU to the original CU;
receive, by the control node, data that is sent by the original CU and that is for deciphering the third BAP PDU;
   or
in a case that the control node includes the original CU, the method further includes:
   in a case that the control node receives the third BAP PDU, and the sixth indication is used to indicate that the third BAP PDU is generated according to encryption information of the target CU, sending, by the control node, the third BAP PDU to the target CU; and
   receiving, by the control node, data that is sent by the target CU and that is for deciphering the third BAP PDU.

Optionally, when the control node includes the target CU or target donor DU, the transceiver 902 is further configured to:
in a case that the control node receives an abnormal BAP PDU, discard the abnormal BAP PDU, where a destination BAP address carried by the abnormal BAP PDU does not match the BAP address of the control node and does not match the BAP address of the original donor DU or the original CU.

The transceiver 902 is configured to receive and send data under the control of the processor 901. The transceiver 902 includes at least two antenna ports.

In FIG. 9, a bus architecture may include any quantity of interconnected buses and bridges, and is specifically linked by various circuits of one or more processors represented by the processor 901 and a memory represented by the memory 903. The bus architecture may further link various other circuits such as a peripheral device, a voltage regulator, and a power management circuit together. These are all well-known in the art, and therefore are not further described in this specification. A bus interface provides an interface. The transceiver 902 may be multiple elements, in other words, includes a transmitter and a receiver, and provides a unit configured to communicate with various other apparatuses on a transmission medium.

The processor 901 is responsible for bus architecture management and general processing. The memory 903 may store data used by the processor 901 when the processor 701 performs an operation.

Preferably, the embodiment of this application also provides an IAB node, including a processor 901, a memory 903, and programs Alternatively, instructions stored in the memory 903 and executable on the processor 901. When the program Alternatively, instruction is executed by the processor 901, the various processes of the foregoing data unit processing method embodiments can be achieved, and the same technical effect can be achieved. To avoid repetition, details are not repeated here.

Preferably, the embodiment of this application also provides a control node, including a processor 901, a memory 903, and a program or an instruction stored in the memory 903 and executable on the processor 901, When the program or the instruction is executed by the processor 901, each process of the data unit processing method embodiment described above can be realized, and the same technical effect can be achieved. To avoid repetition, details are not repeated herein.

The embodiment of this application also provides a readable storage medium. The readable storage medium may be non-volatile or volatile. A program or an instruction is stored on the readable storage medium. When the program or the instruction is executed by the processor, the steps of the data unit processing method on the IAB node side provided by the embodiment of this application are realized.

The embodiment of this application also provides a computer program product, the computer program product is stored in a non-transitory storage medium, and the computer program product is executed by at least one processor to implement steps of the data unit processing method on the control node side provided in the embodiment of this application, and can achieve the same technical effect. To avoid repetition, details are not described herein again.

The processor is a processor in the terminal or the network device in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip, the chip includes a processor and a communication interface, the communication interface is coupled to the processor, and the processor is configured to run programs or instructions to implement each process of the embodiment of the foregoing data unit processing method and the same technical effects can be achieved. To avoid repetition, details are not described herein again.

It should be understood that the chip mentioned in this embodiment of this application may also be referred to as a system-level chip, a system chip, a chip system, or an on-chip system chip.

It should be noted that in this specification, the term "include", "comprise", and other variants are intended to cover non-exclusive inclusion, so that a process, method, article, or apparatus that includes a series of elements includes not only those elements but also other elements that are not explicitly listed, or includes elements inherent to such a process, method, article, or apparatus. An element limited by "includes a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a software product. The computer software product is stored in a storage medium (such as a ROM/RAM, a hard disk, or an optical disc), and includes several instructions for instructing a terminal (which may be mobile phone, a computer, a server, an air conditioner, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. A data unit processing method, comprising:
performing, by an integrated access backhaul IAB node, a data unit processing operation during a switching association period, wherein the data unit processing operation comprises at least one of following:
retaining a first BAP protocol data unit PDU having no matching backhaul adaptation protocol BAP routing configuration in the IAB node;
routing, to a target donor DU, a second BAP PDU whose target BAP address is an original donor distributed unit DU; and
performing processing according to a BAP routing identifier in a third BAP PDU, wherein the third BAP PDU includes two BAP routing identifiers.

2. The method according to claim 1, wherein the switching association period comprises one of following:
a period associated with a switching process of switching from the original donor DU to the target donor DU in a same centralized unit CU by the IAB node; and
a period associated with a switching process of switching from an original CU to a target CU by the IAB node, wherein the original donor DU is a DU belonging to the original CU, and the target donor DU is a DU belonging to the target CU.

3. The method according to claim 1, wherein the method further comprises at least one of:
receiving, by the IAB node, a first indication sent by an original CU or the original donor DU, wherein the first indication is used to indicate to stop discarding the first BAP PDU;
receiving, by the IAB node, a second indication sent by a target CU or the target donor DU, wherein the second indication is used to indicate to stop discarding the first BAP PDU; and
receiving, by the IAB node, a third indication sent by the target CU or the target donor DU, wherein the third indication is used to instruct to route the second BAP PDU to the target donor DU.

4. The method according to claim 3, wherein at least one of the first indication, the second indication and the third indication is carried in a switching command or received before switching starts; or
at least one of the first indication, the second indication and the third indication is received after switching is completed.

5. The method according to claim 1, wherein the switching association period comprises a first period after switching is completed, and the method further comprises:
in a case that the first period ends, receiving, by the IAB node, a fourth indication sent by a target CU or the target donor DU, wherein the fourth indication instructs to stop performing the data unit processing operation.

6. The method according to claim 1, wherein the switching association period comprises a first period after the switching is completed, the IAB node retains a BAP address of the original donor DU during the first period, and after the first period ends, the IAB node removes the BAP address of the original donor DU.

7. The method according to claim 1, wherein the routing, to a target donor DU, a second BAP PDU whose target BAP address is an original donor distributed unit DU comprises:
performing a rewriting operation on the second BAP PDU, and routing the second BAP PDU after the rewriting operation to the target donor DU, wherein the rewriting operation comprises at least one of following:
rewriting a first routing identifier of the second BAP PDU to a second routing identifier, wherein the first routing identifier is used to route to the original donor DU, and the second routing identifier is used to route to the target donor DU; and
rewriting a BAP path of the second BAP PDU to a BAP path of the target donor DU.

8. The method according to claim 1, wherein the performing processing according to a BAP routing identifier in the third BAP PDU comprises one of following:
modifying the third BAP PDU to a BAP PDU comprising only one BAP routing identifier, and transmitting according to the one BAP routing identifier;
in a case that the third BAP PDU includes a BAP routing identifier for routing to the original donor DU, and includes a BAP routing identifier for routing to the target donor DU, routing the third BAP PDU to the original donor DU or the target donor DU; and
in a case that a BAP address carried by a BAP routing identifier comprised in the third BAP PDU is a BAP address of the IAB node, buffering the third BAP PDU or delivering, to an upper layer, a service data unit SDU carried by the third BAP PDU.

9. The method according to claim 8, wherein the third BAP PDU further includes a fifth indication for indicating that the third BAP PDU includes two BAP routing identifiers.

10. The method according to claim 2, wherein in a case that the switching association period comprises a period associated with a switching process of switching from the original CU to the target CU by the IAB node, the third BAP PDU further includes a sixth indication, and the sixth indication is used to indicate that the third BAP PDU is generated according to encryption information of the original CU, or is used to indicate that the third BAP PDU is generated according to encryption information of the target CU.

11. The method according to claim 10, wherein in a case that the third BAP PDU is a downlink BAP PDU, the method further comprises:
indicating, by the IAB node, to the terminal that the third BAP PDU is generated according to the encryption information of the original CU, or indicating that the third BAP PDU is generated according to the encryption information of the target CU.

12. The method according to claim 1, wherein the third BAP PDU includes:
a BAP routing identifier containing only a BAP address; and
a BAP routing identifier containing a BAP address and a BAP path.

13. The method according to claim 1, wherein the third BAP PDU includes a third BAP routing identifier configured by an original CU and a fourth BAP routing identifier configured by a target CU, and a sequence of the third BAP routing identifier and the fourth BAP routing identifier is used to indicate that the third BAP PDU is generated by the original CU or the target CU.

14. The method according to claim 1, wherein the method further comprises at least one of following:
in a case that the IAB node receives a fourth BAP PDU, routing the fourth BAP PDU to the target donor DU, wherein a target BAP address of the fourth BAP PDU matches a BAP address of the target donor DU;
in a case that the IAB node receives a fifth BAP PDU, discarding the fifth BAP PDU, wherein a target BAP address of the fifth BAP PDU does not match a BAP address of the original donor DU, and does not match the BAP address of the target donor DU; and
in a case that the IAB node receives a sixth BAP PDU, discarding the sixth BAP PDU, wherein a target BAP address of the sixth BAP PDU does not match at least one of following:
an old BAP address of an IAB node that BAP routing configuration of the IAB node can reach;
a new BAP address of an IAB node that BAP routing configuration of the IAB node can reach; and
a BAP address of the IAB node.

15. A data unit processing method, comprising:
sending, by a control node, indication information to an integrated access backhaul IAB node, wherein the indication information is used to instruct the IAB node to perform a data unit processing operation during a switching association period, wherein the data unit processing operation comprises at least one of following:
retaining a first BAP protocol data unit PDU having no matching backhaul adaptation protocol BAP routing configuration in the IAB node;
routing, to a target donor DU, a second BAP PDU whose target BAP address is an original donor distributed unit DU; and
performing processing according to a BAP routing identifier in a third BAP PDU, wherein the third BAP PDU includes two BAP routing identifiers.

16. The method according to claim 15, wherein the control node comprises one of following:
the original donor DU, the target donor DU, an original control unit CU, and a target CU.

17. The method according to claim 16, wherein in a case that the control node comprises the original CU or the original donor DU, the method further comprises:
sending, by the control node, a BAP address of the original donor DU to the target donor DU or the target CU.

18. The method according to claim 16, wherein in a case that the control node comprises the original CU or the original donor DU, the method further comprises:
sending, by the control node, a request message to the target donor DU or the target CU, wherein the request message is used to request to perform data lossless switching; and
the sending, by the control node, indication information to the integrated access backhaul IAB node comprises:
in a case that the control node receives a response message that is returned by the target donor DU or the target CU and that agrees to the request message, sending, by the control node, the indication information to the integrated access backhauled IAB node.

19. The method according to claim 16, wherein the method further comprises at least one of:
in a case that the control node comprises the original CU or the original donor DU, sending, by the control node, a first indication to the IAB node, wherein the first indication is used to indicate to stop discarding the first BAP PDU;
in a case that the control node comprises the target CU or target donor DU, sending, by the control node, a second indication to the IAB node, wherein the second indication is used to indicate to stop discarding the first BAP PDU; and
in a case that the control node comprises the target CU or the target donor DU, sending, by the control node, a third indication to the IAB node, wherein the third indication is used to indicate to route the second BAP PDU to the target donor DU.

20. The method according to claim 19, wherein at least one of the first indication, the second indication and the third indication is carried in a switching command or sent before switching starts; or
at least one of the first indication, the second indication and the third indication is sent after switching is completed.

21. The method according to claim 15, wherein the switching association period comprises a first period after switching is completed, and the method further comprises:
in a case that the first period ends, sending, by the control node, an indication for stopping performing the data unit processing operation to the IAB node.

22. The method according to claim 16, wherein in a case that the switching association period comprises a period associated with a switching process of switching from the original CU to the target CU by the IAB node, the third BAP PDU further includes a sixth indication, and the sixth indication is used to indicate that the third BAP PDU is generated according to encryption information of the original CU, or is used to indicate that the third BAP PDU is generated according to encryption information of the target CU.

23. The method of claim 22, wherein in a case that the control node comprises the target CU, the method further comprises:
in a case that the control node receives the third BAP PDU, and the sixth indication is used to indicate that the third BAP PDU is generated according to encryption information of the original CU, sending, by the control node, the third BAP PDU to the original CU;
receiving, by the control node, data that is sent by the original CU and that is for deciphering the third BAP PDU;
or
in a case that the control node comprises the original CU, the method further comprises:
in a case that the control node receives the third BAP PDU, and the sixth indication is used to indicate that the third BAP PDU is generated according to encryption information of the target CU, sending, by the control node, the third BAP PDU to the target CU; and
receiving, by the control node, data that is sent by the target CU and that is for deciphering the third BAP PDU.

24. The method according to claim 16, wherein in a case that the control node comprises the target CU or the target donor DU, the method further comprises:
in a case that the control node receives an abnormal BAP PDU, discarding the abnormal BAP PDU, wherein a destination BAP address carried by the abnormal BAP PDU does not match a BAP address of the control node and does not match a BAP address of the original donor DU or the original CU.

25. A data unit processing apparatus, comprising:
an execution module, configured to perform a data unit processing operation during a switching association period, wherein the data unit processing operation comprises at least one of following:
retaining a first B BAP protocol data unit PDU having no matching backhaul adaptation protocol BAP routing configuration in the integrated access backhaul IAB node;
routing, to a target donor DU, a second BAP PDU whose target BAP address is an original donor distributed unit DU; and
performing processing according to a BAP routing identifier in a third BAP PDU, wherein the third BAP PDU includes two BAP routing IDs;
wherein the IAB node comprises the apparatus.

26. The apparatus according to claim 25, wherein the switching association period comprises one of following:
a period associated with a switching process of switching from the original donor DU to the target donor DU in a same centralized unit CU by the IAB node; and
a period associated with a switching process of switching from an original CU to a target CU by the IAB node, wherein the original donor DU is a DU belonging to the original CU, and the target donor DU is a DU belonging to the target CU.

27. The apparatus according to claim 25, wherein the apparatus further comprises at least one of:
a first receiving module, configured to receive a first indication sent by an original CU or the original donor DU, wherein the first indication is used to indicate to stop discarding the first BAP PDU;
a second receiving module, configured to receive a second indication sent by a target CU or the target donor DU, wherein the second indication is used to indicate to stop discarding the first BAP PDU; and
a third receiving module, configured to receive a third indication sent by the target CU or the target donor DU, wherein the third indication is used to instruct to route the second BAP PDU to the target donor DU.

28. A data unit processing apparatus, comprising:
a first sending module, configured to send indication information to an integrated access backhaul IAB node, wherein the indication information is used to instruct the IAB node to perform a data unit processing operation during a switching association period, wherein the data unit processing operation comprises at least one of following:
retaining a first BAP protocol data unit PDU having no matching backhaul adaptation protocol BAP routing configuration in the IAB node;
routing, to a target donor DU, a second BAP PDU whose target BAP address is an original donor distributed unit DU; and
performing processing according to a BAP routing identifier in a third BAP PDU, wherein the third BAP PDU includes two BAP routing IDs;
wherein the control node comprises the apparatus.

29. The apparatus according to claim 28, wherein in a case that the control node comprises the original CU or the original donor DU, the apparatus further comprises:
a second sending module, configured to send a request message to the target donor DU or the target CU, wherein the request message is used to request to perform data lossless switching; and
the first sending module is configured to: in a case that the control node receives a response message that is returned by the target donor DU or the target CU and that agrees to the request message, send, by the control node, the indication information to the integrated access backhauled IAB node.

30. A integrated access backhaul IAB node, comprising: a memory, a processor, and a program or an instruction stored in the memory and executable on the processor, wherein when the program or the instruction is executed by the processor, steps of the data unit processing method according to any one of claims 1 to 14 are implemented.

31. A network node, comprising: a memory, a processor, and a program or an instruction stored in the memory and executable on the processor, wherein when the program or the instruction is executed by the processor, steps of the data unit processing method according to any one of claims 15 to 24 are implemented.

32. A readable storage medium, storing a program or an instruction, wherein when the program or the instruction is executed by a processor, steps of the data unit processing method according to any one of claims 1 to 14 are implemented, or when the program or the instruction is executed by the processor, steps of the data unit processing method according to any one of claims 15 to 24 are implemented.

33. A chip, comprising a processor and a communication interface, wherein the communication interface is coupled to the processor, and the processor is configured to run a program or an instruction to implement steps of the data unit processing method according to any one of claims 1 to 14, or steps of the data unit processing method according to any one of claims 15 to 24.

34. A computer program product, stored in a non-transitory readable storage medium, wherein the computer program product is executed by at least one processor to implement steps of the data unit processing method according to any one of claims 1 to 14, or the computer program product is executed by at least one processor to implement steps of the data unit processing method according to any one of claims 15 to 24.

35. A communication device, configured to perform the steps of the data unit processing method according to any one of claims 1 to 14, or configured to perform the steps of the data unit processing method according to any one of claims 15 to 24.
